# EUROPÄISCHE PATENTSCHRIFT

(11) **EP 0 403 853 B1**
(45) Veröffentlichungstag und Bekanntmachung des Hinweises auf die Patenterteilung: **11.09.1996**
(21) Anmeldenummer: 90110398.6
(22) Anmeldetag: 31.05.1990
(51) Int. Cl.: B60N 2/28

(54) **Vorrichtung und Verfahren zum Schutz einer Person, insbesondere eines Kleinkindes, in einem Kraftfahrzeug**
Device and method for protecting a person, in particular an infant, in a motor vehicle
Dispositif et méthode de protection d'une personne, en particulier d'un petit enfant, dans un véhicule automobile

(30) Priorität: 20.06.1989 DE 3920145
(43) Veröffentlichungstag der Anmeldung: 27.12.1990
(73) Patentinhaber: PEG Kinderwagen Vertriebs- und Service GmbH, D-85221 Dachau (DE)
(72) Erfinder: Gietl, Walter, Dipl.-Ing. (FH), D-8000 München 70 (DE)
(74) Vertreter: Grünecker, Kinkeldey, Stockmair & Schwanhäusser Anwaltssozietät

(56) Entgegenhaltungen:
- EP-A- 0 049 680
- AU-B- 77 488
- DE-A- 1 904 687
- DE-A- 1 949 089
- DE-U- 8 715 700
- FR-A- 1 586 051
- FR-A- 2 101 292
- FR-A- 2 419 079
- FR-A- 2 596 338
- GB-A- 1 228 657
- NL-A- 6 400 492
- US-A- 4 033 622

## Beschreibung

Die vorliegende Erfindung betrifft eine Vorrichtung zum Schutz einer Person, insbesondere eines Kleinkindes, in einem Kraftfahrzeug bei Längsaufprall, insbesondere bei einem Vorn-Aufprall, der dadurch erzeugt wird, daß das fahrende Fahrzeug gegen ein Hindernis prallt. Die Vorrichtung ist mit einem Träger versehen, an dem die Person fixierbar ist und der ein Sitzteil sowie eine im wesentlichen bis in den Kopfbereich der Person reichende Rückenlehne aufweist und in Verbindung mit einem ortsfesten Fahrzeugsitz vorgesehen ist. Die Erfindung betrifft ferner ein Verfahren zu einem derartigen Schutz einer Person.

In Kraftfahrzeugen sind bereits verschiedene Gurtsicherungsvorrichtungen zur Sicherung der Fahrzeugbenutzer vor impulsbedingten Schäden bekannt. Diese Schäden entstehen insbesondere dann, wenn das Fahrzeug auf ein Hindernis prallt, wie dies z.B. bei einem Auffahrunfall zu beobachten ist. Hierbei stellt sowohl die Gefahr einer aufprallbedingten Überdehnung der Halswirbelsäule als auch der sogenannte "Peitscheneffekt" eine besondere Gefahr für den auf seinem Sitz durch einen Sicherheitsgurt festgelegten Fahrgast dar. Hierbei führt dann, nachdem bei einem Vorn-Aufprall des Fahrzeuges die ungehinderte Vorwärtsbewegung des Fahrgastes von dem Sitz weg nach vorn durch den Sicherheitsgurt wesentlich eingeschränkt ist, die auf den Oberkörper des Fahrgastes, der von der Sitzrückenlehne oder Kopfstütze entfernt ist, einwirkende Reaktionskraft zu einer ruckartigen Rückwärtsbewegung des Kopfes mit der Gefahr schwerer Schädigungen im Halswirbel- und Nackenbereich des Fahrgastes.

Besonderes Augenmerk muß auch auf die sichere Unterbringung von Kindern in Kraftfahrzeugen während der Fahrt, insbesondere von Kleinkindern auf den Rücksitzen oder dem Beifahrersitz des Fahrzeuges, gelegt werden. Hierfür ist eine Vielzahl von abgepolsterten Kindersitzen bekannt, die auf einen dieser Sitze des Fahrzeuges aufgesetzt werden, wobei der Kindersitz entweder unabhängig von der Aufnahme des Kindes fest mit dem Fahrzeugsitz bzw. einer Rücksitzbank verbunden wird und das Kind mit einem herkömmlich am Fahrzeugsitz vorgesehenen Sicherheitsgurt in dem Kindersitz festgelegt wird oder bei denen die herkömmliche Sicherheitsgurtanordnung an den Rücksitzen dazu verwendet wird, sowohl den Kindersitz als auch das Kind in dem Kindersitz gemeinsam festzulegen.

Bei den vorgenannten Sicherheitsvorrichtungen als Kindersitz, insbesondere für Kleinkinder, wird jeweils versucht, den Kindersitz selbst und auch das Kind möglichst ortsfest auf dem Rücksitz des Fahrzeuges festzulegen.

Darüber hinaus sind auch Kindersitzanordnungen bekannt, bei denen die Kindersitz-Sicherheitsvorrichtung zur Aufnahme eines Kleinkindes um eine an der Sitzvorderkante liegende Achse schwenkbar ist, wobei diese Schwenkbewegung durch den Sicherheitsgurt begrenzt wird, der das Kind mit Sitz und Rückenlehne der Sicherheitsvorrichtung bzw. des Kindersitzes festlegt. Bei derartigen Vorrichtungen wird ein Teil der auf den Kindersitz einwirkenden Aufprallenergie in eine kontrollierte Schwenkbewegung der als einarmiger Hebel ausgebildeten Sitzvorrichtung umgesetzt, um hierdurch unter sicherer Beinahrung des Kindes Verletzungen zu vermeiden.

Auch bei diesen Sicherheitsvorrichtungen für Kinder besteht jedoch die Gefahr einer relativen, stoßbedingten Ablösung des Oberkörpers des Kindes von der Rückenlehne mit der besonderen Gefährdung des Halswirbel- und Nackenbereiches im Gefolge der auftretenden Reaktionskräfte.

Es ist schließlich auch bekannt, Kindersitze insbesondere auf dem Beifahrersitz oder auf dem zugehörigen Rücksitz rittlings anzuordnen, d.h. gegenüber einer Normalsitzposition eines Fahrgastes in einem Fahrzeug um 180° gedreht anzuordnen, wobei das Gesicht der Person bzw. des Kindes der Sitzrückenlehne des Fahrzeugsitzes zugewandt ist. Bei einer solchen Kindersitzanordnung werden die eingangs erwähnten Schwierigkeiten insbesondere bei Auffahrunfällen, hervorgerufen durch ein anderes Fahrzeug, beobachtet.

Aus der FR-A-2 596 338 (dem Oberbegriff des unabhängigen Anspruchs 1 entsprechend) ist eine Sicherheits-Sitzvorrichtung für Kraftfahrzeuge bekannt, bei der der Sitz um eine stationäre Drehachse bewegbar ist, wobei ein Fußbereich aufprallbedingt nach vorn bewegt wird.

Der Erfindung liegt demgegenüber die Aufgabe zugrunde, eine Vorrichtung zum Schutz einer Person, insbesondere eines Kleinkindes in einem Kraftfahrzeug gegen die folgen eines Längsaufpralls, insbesondere Vorn-Aufprall des Fahrzeuges anzugeben, durch die es möglich ist, die Gefahr von Verletzungen, die infolge eines Längsaufpralls des Fahrzeuges auftreten können, zu verringern und insbesondere durch Reaktionskräfte einer Sicherheitsgurtanordnung bedingte Verletzungen im Halswirbel- und Nackenbereich zu vermeiden.

Der Erfindung liegt ferner die Aufgabe zugrunde, ein Verfahren zu Schutz einer Person, insbesondere eines Kleinkindes in einem Kraftfahrzeug bei Längsaufprall desselben anzugeben, durch das die Gefahr von aus aufprallbedingten Bewegungen der Person gegenüber der sie aufnehmenden Abstützeinheit herrührenden Verletzungen, insbesondere im Halswirbel- und Nackenbereich, im wesentlichen vermieden sind.

Die erstgenannte Aufgabe wird bei einer Vorrichtung der eingangs genannten Art erfindungsgemäß dadurch gelöst, daß die Bewegungseinheit eine erste Teilmasse oberhalb einer ortsveränderlichen Schwenkachse sowie eine zweite Teilmasse unterhalb der Schwenkachse aufweist und eine aufprallbedingte, resultierende Verzögerungskraft im Bereich der Rückenlehne an der ersten Teilmasse oberhalb der Schwenkachse angreift.

Besonders günstige Bewegungsführungs- und Belastungsverhältnisse werden dadurch erreicht, daß der Träger in seiner Gesamtheit relativ zu dem Fahrzeugsitz bewegbar angeordnet ist und die Person mit dem Träger zu einer Bewegungseinheit verbindbar ist, die derart ausgebildet, gelagert und/oder zwangsgeführt ist, daß bei Längsaufprall und Verlagerung des Trägers eine Relativbewegung zwischen der Person und dem Träger zunächst im Kopf- und Rückenbereich der Person in wesentlichen vermieden ist.

Einer aufprallbedingten Bewegung einer ersten Teilmasse der Bewegungseinheit oberhalb des Drehpunktes derselben steht eine Bewegung einer zweiten Teilmasse der Bewegungseinheit unterhalb des Drehpunktes derselben gegenüber. Aufprallbedingt wirkt auf die aus der Person, insbesondere dem Kleinkind, und ihrem zugehörigen Träger, in dem sie sitzt, gebildete Bewegungseinheit, eine Verzögerungskraft ein, die vorwärtsgerichtet ist und durch die die Bewegungseinheit nach vorne bei einem Vorn-Aufprall belastet wird. Entsprechend wird mit der oberen Teilmasse (Oberkörperbereich) der Bewegungseinheit um einen seinerseits ortsveränderlichen Drehpunkt ein in Fahrtrichtung vorwärts drehendes Drehmoment erzeugt, während die durch eine Verzögerungskraft in Vorwärtsrichtung beschleunigte, normalerweise gegenüber der oberen Teilmasse geringere untere Teilmasse zu einem Gegendrehmoment in entgegengesetztem Drehsinn um den Drehpunkt bzw. eine im wesentlichen horizontale Drehachse führt.

Da ein wichtiges Merkmal einer besonders vorteilhaften Ausführungsform der erfindungsgemäßen Vorrichtung darin besteht, daß der Sitzbereich der Vorrichtung nicht mehr als momentübertragendes, am Fahrzeugsitz abgestützes Festlager ausgeführt ist, sondern ein Loslager der Vorrichtung bildet, über das im wesentlichen Drehmomente nicht übertragen werden, führt dies dazu, daß sich die Verzögerungsbeschleunigung der Sitzschale, mit der Person darin, in eine Schwingbewegung der gesamten, aus Träger und Person bestehenden Bewegungseinheit um den Drehpunkt bzw. die Drehachse umsetzen kann, wobei das entgegenwirkende Drehmoment der unteren Teilmasse der Vorwärtsauslenkung der oberen Teilmasse entgegenwirkt und diese in einem zulässigen Rahmen, wie er z.B. durch EG-Standards vorgegeben ist, hält. Dies führt außerdem dazu, daß im Bereich der oberen Teilmasse ein gefährliches Abheben des Oberkörper- und Rückenbereiches der Person bzw. des Kleinkindes von der abstützenden Rückenlehne des Trägers vermieden wird, so daß sowohl aufprallbedingte Überdehnung der Halswirbelsäule als auch unter Rückschwingen der Träger-Person-Bewegungseinheit der sogenannte "Peitscheneffekt" vermieden ist und der Kopf- und Halsbereich gemeinsam mit dem Rückenbereich in praktisch unmittelbarer Anlage an der Rückenlehne des Trägers verbleiben, so daß Überbeanspruchungen des Halswirbelbereiches durch extreme Kopfbeschleunigungen vermieden werden.

Gemäß einer weiteren, bevorzugten Ausführungsform der Erfindung ist der Träger für ein Kleinkind als Schalenkörper mit Seitenwangen ausgebildet und beweglich an einem fahrzeugsitzfesten Auflagerteil abgestützt. Auf diese Weise ist das Kleinkind auch vor seitlich auftretenden Stößen hinreichend geschützt.

Eine definierte Zwangsführung des schwenkbeweglichen Trägers an dem Auflagerteil des Fahrzeugsitzes wird in einer bevorzugten Ausführungsform der Erfindung durch ein in Verbindung mit jeder Seitenwange des Trägers vorgesehenes Viergelenkgetriebe erreicht. Hierdurch ergibt sich nicht nur eine präzise Bewegungsführung des Trägers sondern auch die Möglichkeit reproduzierbarer Einstellung der Lagerungs- und Reibungsverhältnisse in den Schwenklagerungen.

Zur Steuerung der Beschleunigungswerte der Rückkehrbewegung des Trägers oder zumindest der Rückenlehne desselben nach einer Vorwärtsauslenkung im Gefolge eines Längsaufpralls, insbesondere Vorn-Aufpralls des Fahrzeuges, ist nach einer weiteren, bevorzugten Ausführungsform der Erfindung eine Rücklauf-Dämpfungseinrichtung vorgesehen. Diese kann auch dadurch realisiert werden, daß im Rahmen einer für den Träger vorgesehenen Schwenklagerung zumindest deren trägerseitige Gelenke einen richtungsabhängigen Reibwert aufweisen, derart, daß die Rücklaufbewegung des Trägers einer größeren Dämpfung als die aufprallbedingte Auslenkungsbewegung, insbesondere der Rückenlehne des Trägers nach vorn unterliegt.

Die Rücklauf-Dämpfungseinrichtung kann vorzugsweise auch als im wesentlichen in einer Richtung wirksamer hydraulischer oder pneumatischer Dämpfungskolben in einem entsprechenden Dämpfungszylinder ausgestaltet sein.

Damit der Träger in seiner Ausgangslage und/oder bei Benutzung eine definierte Position gegenüber dem Auflagerteil und dem Fahrzeugsitz einnimmt, ist vorzugsweise eine Abstützeinrichtung für die Rückenlehne in Verbindung mit dem Auflagerteil vorgesehen.

Nach einer anderen Ausführungsform der Erfindung kann es bei Kleinkindern vorteilhaft sein, daß nach der aufprallbedingten Schwenkauslenkung des Trägers um den Drehpunkt bzw. die Drehachse generell vermieden wird, daß unter dem Einfluß der Reaktionskräfte der Träger in seine Ausgangslage zurückschwenkt. Zu diesem Zweck kann zwischen dem Auflagerteil und dem Träger eine Abstützvorrichtung vorgesehen sein, die nach aufprallbedingter Auslenkungsbewegung, insbesondere Vorwärtsbewegung der Rückenlehne des Trägers in eine, diesen in seiner ausgelenkten Endstellung festlegenden Ausnehmung an dem Träger eingreift.

Zur Gewährleistung einer Schwenkbewegung des gesamten Trägers in Verbindung mit der Möglichkeit, die Dämpfung der aufprallbedingten Auslenkungs- und Rückstellbewegung des Trägers einzustellen, wird bevorzugt, daß das Auflagerteil eine Aussparung aufweist, in die ein vorderer Teil des Sitzbereiches des Trägers bei einem Vorn-Aufprall des Fahrzeuges mit erhöhtem Reibwiderstand eintaucht. Der Reibwiderstand kann hierbei durch angemessene Materialauswahl bezüglich des Polstermateriales des Trägers und/oder der Oberflächenrauigkeit der Aussparung des Auflagerteiles beeinflußt werden.

Eine vorteilhafte Gestaltung des Trägers ohne Verlust seiner Fähigkeit, aufprallbedingte Stoßenergie in Bewegungsenergie umzusetzen ist auch durch eine veränderte Trägergestaltung möglich, derart, daß die Rückenlehne des Trägers schwenkbar an dem Sitzteil desselben gelagert und mit diesem über ein Zugmittelgetriebe verbunden ist, während das Sitzteil in einer Linearführung an dem Auflagerteil, das sich seinerseits in diesem Bereich an dem Sitzteil des Fahrzeugsitzes abstützt, geführt ist. Bei dieser Ausführungsform des Erfindungsgegenstandes findet keine Schwenkung des Trägers insgesamt um eine Drehachse statt, vielmehr schwenkt bei einem Vorn-Aufprall die Rückenlehne mit dem Oberkörperbereich der Person bzw. eines Kleinkindes nach vorn, während zugleich Becken und Oberschenkel der Person mit dem Sitzteil des Trägers entlang der Linearführung nach hinten gleiten. Das Zugmittelgetriebe, insbesondere ein Seil oder mehrere Seile werden über zumindest eine, an dem Auflagerteil gelagerte Umlenkrichtung, Rolle etc. geführt und sorgt für die zugkraftübertragende Verbindung zwischen Rückenlehne und Sitzteil des Trägers sowie ggf. für eine Dämpfung der Bewegungsabläufe, z.B. in Verbindung mit einer Reibungsführung der Zugmittel.

In einer anderen Ausgestaltung der Erfindung kann auf ein definitives Gelenk zwischen schwenkbarer Rückenlehne des Trägers und linear gleitverschieblichem Sitzteil desselben auch verzichtet werden, wenn durch geeignete Materialwahl und Struktur der Rückenlehne des insbesondere aus Kunststoff bestehenden Trägers die Rückenlehne aufprallbedingt elastisch deformierbar ist, wobei der Sitzbereich des Trägers im wesentlichen ortsfest verbleibt.

Eine erfindungsgemäße Bewegungsführung des Trägers kann auch dadurch gewährleistet werden, daß die Lagerelemente für die Abstützung des Trägers an dem Auflagerteil des Fahrzeugsitzes elastisch deformierbar sind und durch ihre elastische Deformation eine Schwenkbewegung des Trägers um dessen Massenmittelpunkt ermöglichen.

Bei all diesen Ausführungsformen, bleibt, insbesondere unter gleichzeitiger Bewegung des Becken- bzw. Oberschenkel-oder Beinbereiches der Person, vorzugsweise eines Kleinkindes, der Oberkörper derselben einschließlich des Hals- und Kopfbereiches in enger Anlage an der Rückenlehne des Trägers, in dem die Person angegurtet ist.

In einer weiteren Ausführungsform der Vorrichtung nach der vorliegenden Erfindung ist der Träger mit dem Auflagerteil unter Bildung zumindest eines flexiblen Fluiddruckraumes zwischen dem Träger und dem Auflagerteil mit diesem zu einem integralen Sitzkörper verbunden. Diese Lösung ermöglicht eine in weitem Rahmen steuerbare Fluiddämpfung sowohl der Auslenkungsbewegung als auch der Rückstellbewegung des Trägers nach einem Längsaufprall des Fahrzeuges, insbesondere einem Vorn-Aufprall. Vorzugsweise wird der Fluiddruckraum durch eine Faltenbalganordnung gebildet und ist der Fluiddruckraum in zumindest zwei Kammern unterteilt, die miteinander durch Fluidsteuermittel druckabhängig verbindbar sind. Für ein definiertes Bewegungsverhalten zwischen Träger und Auflagerteil ist in Verbindung mit der Ausbildung des flexiblen Fluiddruckraumes vorzugsweise eine mechanische Schwenkführungsanordnung vorgesehen. Diese kann z.B. auch aus einem Stift-Nut-Eingriff im Bereich der Seitenwangen des Trägers zwischen dem Träger und dem Auflagerteil bestehen.

Durch die vorerläuterte Schwenklagerung im Sinne eines "Air-Bags" wird eine hohe Flexibilität in der Steuerung des Bewegungsablaufes des Trägers und der möglichen Dämpfungscharakteristik der Bewegungsabläufe angeboten.

In Kombination mehrerer, der vorerläuterten Ausführungsformen des Erfindungsgegenstandes kann die Vorrichtung an der Unterseite des Sitzteiles des Trägers mit einem, durch eine flexible membranabgeschlossenen Fluiddruckraum versehen sein, der in Verbindung mit einem, an dem Auflagerteil vorgesehenen Verdrängungs-Formkörper als steuerbare Bewegungs-Dämpfungseinrichtung wirksam ist, wobei die Schwenkbewegung selbst z.B. durch ein Viergelenk-Koppelgetriebe zwischen Träger und Auflagerteil an beiden Seiten des Trägers zwangsgeführt ist. Auch in diesem Fall ist der vorzugsweise luftgefüllte Fluiddruckraum in eine vorderen und eine hintere Kammer unterteilt, die über eine Strömungsdrosselstelle verfügt, welche z.B. eine in beiden Strömungsrichtungen wirksame Drosselklappe bei gegebenenfalls gleichzeitiger Möglichkeit der Verbindung des Fluiddruckraumes mit der Umgebungsatmosphäre enthält.

Weitere, bevorzugte Ausgestaltungen des Erfindungsgegenstandes sind in den übrigen Unteransprüchen angegeben.

Zur Lösung der zweitgenannten Aufgabe sind bei einem Verfahren zum Schutz einer Person, insbesondere eines Kleinkindes, in einem Kraftfahrzeug bei Längs-Aufprall, insbesondere Vorn-Aufprall, mit einem Träger, an dem die Person fixiert wird und der ein Sitzteil und eine im wesentlichen bis in den Kopfbereich der Person reichende Rückenlehne aufweist sowie in Verbindung mit einem ortsfesten Fahrzeugsitz angeordnet ist, die Schritte vorgesehen, daß die Person mit dem Träger zumindest im Bereich der Rückenlehne derselben im wesentlichen zu einer Bewegungseinheit verbunden wird und der Träger zumindest im Bereich der Rückenlehne durch die Aufprallenergie bei einem Längs-Aufprall relativ zu dem Fahrzeugsitz beweglich geführt wird, derart, daß der Rücken- und Kopfbereich der Person in enger Anlage an der Rückenlehne des Trägers verbleibt und eine resultierende Verzögerungskraft, die vorwärts gerichtet ist, die Rückenlehne oberhalb einer horizontalen Schwenkachse nach vorne belastet.

Die Erfindung wird nachstehend anhand von Ausführungsbeispielen und zugehörigen Beispielen näher erläutert. In diesen zeigen:
- Fig.1: eine Vorrichtung zum Schutz eines Kleinkindes in einem Kraftfahrzeug nach der vorliegenden Erfindung in schematischer Darstellung und in Seitenansicht, und zwar in einem unbelasteten oder Ausgangszustand,
- Fig.2: eine Vorrichtung nach Fig. 1 in einer aufprallbedingt vorderen Endlage bei Vorn-Aufprall, mit einer Abstützvorrichtung zur Lagefixierung des Trägers der Vorrichtung,
- Fig.3: eine Vorrichtung zum Schutz eines Kleinkindes in einem Kraftfahrzeug nach der vorliegenden Erfindung gemäß einem weiteren Ausführungsbeispiel in einer Lage, die im wesentlichen derjenigen in Fig. 1 entspricht, geeignet für größere Personen,
- Fig.4: eine Darstellung des zweiten Ausführungsbeispieles der Erfindung nach Fig. 3 in einer vorderen Endlage ähnlich derjenigen in Fig. 2,
- Fig.5: eine Vorrichtung zum Schutz eins Kleinkindes in einem Kraftfahrzeug nach einem dritten Ausführungsbeispiel der vorliegenden Erfindung teilweise im Schnitt und in einer Lage, die im wesentlichen derjenigen in Fig. 1 entspricht,
- Fig.6: eine Darstellung des dritten Ausführungsbeispieles der Erfindung nach Fig. 5, teilweise im Schnitt, in einer vorderen Endlage, die im wesentlichen der Lage nach Fig. 2 entspricht.

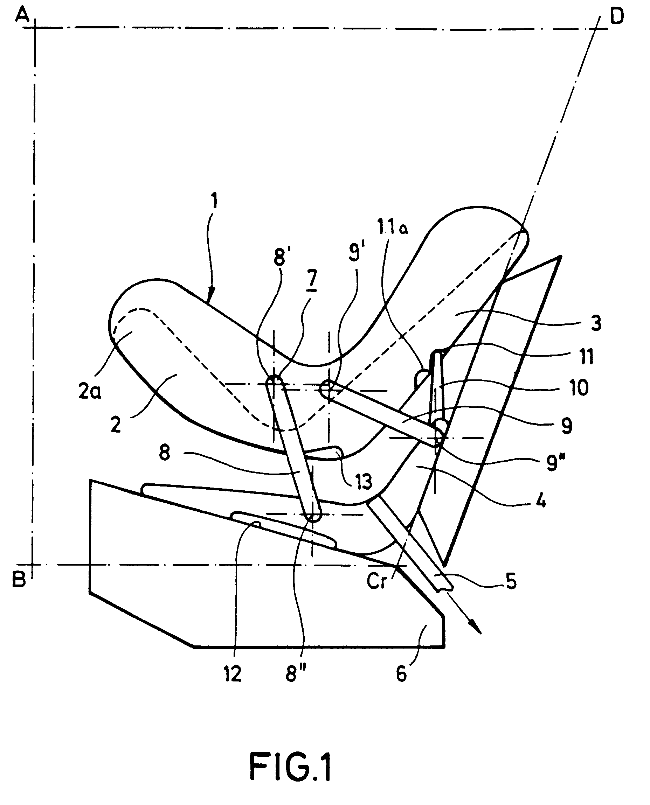

Die erfindungsgemäße Sitz- oder Schutzvorrichtung, insbesondere Kindersitz für Kleinkinder zur Verwendung in einem Kraftfahrzeug umfaßt einen Schalenkörper 1 als Träger des hier nicht dargestellten Kleinkindes, das in dem Schalenkörper durch trägerfeste Sicherheitsgurte, wie z.B. einem Hosenträgergurt oder ein Befestigungstuch mit verhältnismäßig geringem Spielraum festgelegt ist. Dieser Schalenkörper 1 besteht aus einem verwindungssteifen Kunststoffkörper mit Polsterung und Stoffüberzug sowie Seitenwangen, die sowohl im Bereich des Sitzteile 2 als auch der Rückenlehne 3 des Schalenkörpers 1 ausgebildet sind, um das Kleinkind auch gegenüber seitlichen Stößen oder Belastungen hinreichend abzustützen. Die Grundform derartiger Schalenkörper ist von herkömmlicher Art und bedarf nur insofern einer näheren Erläuterung, als darauf hingewiesen wird, daß die Länge der Rückenlehne derart bemessen ist, daß sie dann, wenn sich das Kleinkind in dem Schalenkörper befindet, über den Nackenbereich bis in den Bereich des Hinterkopfes des Kindes reicht. Je nach Gewicht und Größe des Kindes bzw. Schwerpunktlage ist das Kind in der in Fig. 1 gezeigten, abgestützen Ruhestellung des Schalenkörpers aufgenommen oder kann dieser in einer Ruhestellung bei größerer Belastung des Sitzteiles 2 in einer gegenüber Fig. 1 geringfügigen vorwärtsverschwenkten Stellung unter entsprechender Abstützung aufgenommen sein.

Der Schalenkörper 1 ist schwenkbeweglich an einem insbesondere aus Kunststoff bestehenden Auflagerkörper 4 gelagert, der über eine Gurtbefestigung 5 fest mit dem hinteren Fahrzeugsitz bzw. einer hinteren Rückbank des Kraftfahrzeuges verbunden ist.

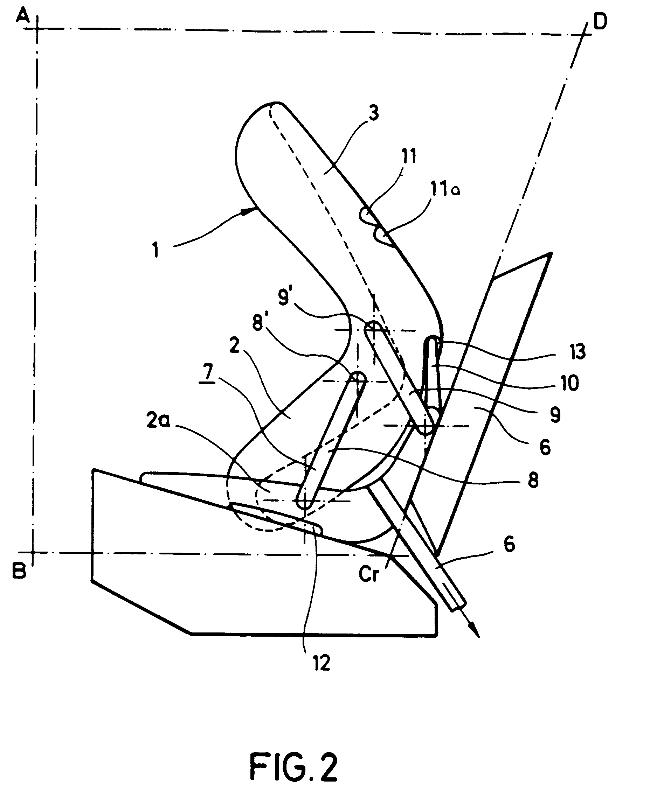

Der hintere Fahrzeugsitz ist in der schematischen Darstellung nach Fig. 1 mit 6 bezeichnet. Die schwenkbewegliche Abstützung des Schalenkörpers 1 an dem Auflagerteil 4 des hinteren Fahrzeugsitzes 6 erfolgt über einen jeweils an beiden Seiten des Schalenkörpers 1 an dessen Seitenwangen angelenkten Viergelenk-Koppelgetriebe 7 mit den Lenkern 8 und 9. Diese bestehen aus hinreichend steifem Material, insbesondere Kunststoff, und bilden an jeder Seite des Schalenkörpers 1 Gelenkpunkte 8′, 9′ an diesem bzw. 8˝ und 9˝ an dem Auflagerteil 4. Je nach den gewünschten Reibungsverhältnisses in den Lagern sind diese entweder als integrale Kunststofflager ausgebildet oder werden separate Lager eingesetzt. Als Lenker 8 bzw. 9 des Koppelgetriebes können vorzugsweise auch Leichtmetallstreben verwendet werden. Eine an dem Auflagerteil 4 schwenkbare Strebe bildet eine Abstützvorrichtung für den Schalenkörper 1 in seiner Ausgangs- oder Ruhelage im Zusammenhang mit Ausnehmungen 11, 11a in der Rückenlehne des Schalenkörpers 1. Im Sitzteilbereich des Auflageteiles 4 besitzt dieses eine Ausnehmung 12, in die bei einer aufprallbedingten Auslenkungsbewegung des Schalenkörpers 1 bei Vorn-Aufprall des Fahrzeuges ein Vorderende 2a des Sitzteiles 2 des Schalenkörpers 1, gegebenenfalls mit einer gewissen Reibung eintauchen kann. Im Sitzbodenbereich des Schalenkörpers 1 befindet sich eine weitere Ausnehmung 13, vorgesehen, um in Verbindung mit dem Hebel 10 den Schalenkörper 1 in einer vorwärts geneigten Endstellung (vergleiche Fig. 2) zu fixieren.

Mit dem strichpunktierten Linienzug A-D-Cr-B ist in den Fig. 1 bis 6 ein Bereich umrissen, wie er gemäß ECE-Standard R44 für die aufprallbedingte Bewegung, insbesondere des Kopfbereiches einer in dem Schalenkörper 1 befindlichen Person, insbesondere eines Kindes, zur Verfügung steht, wobei der so abgegrenzte Raum aus Sicherheitsgründen nicht überschritten werden darf.

Die Wirkungsweise der Vorrichtung nach der Ausführungsform gemäß Fig. 1 wird nachstehend unter Einschluß der Fig. 2 erläutert. Fig. 2 zeigt eine vordere Endstellung des Schalenkörpers 1, wobei ein darin festgegurtetes Kind nicht gezeigt ist. Die Ausführungsform nach den Fig. 1 und 2 ist besonders für die sichere Aufnahme von Kleinkindern vorgesehen. Dabei ist es wichtig, daß das Kleinkind spielarm in dem Schalenkörper 1 durch mit diesem verbundene Gurte festgelegt wird, so daß es mit dem Schalenkörper 1 im wesentlichen eine Bewegungseinheit bildet und auch bei Einwirken aufprallbedingter Belastungen eine Relativbewegung des Kleinkindes zu dem Schalenkörper 1, insbesondere im oberen Rücken- und Halsbereich im wesentlichen vermieden ist.

Durch das Viergelenkgetriebe 7 mit den Lenker 8 und 9 ist der Schalenkörper 1 zwischen der in Fig. 1 dargestellten Ruhe- oder Normallage und der in Fig. 2 dargestellten vorderen Endlage schwenkbar, wobei in dieser Lage eine Verschwenkung der aus dem aufgenommenen Kleinkind und dem Schalenkörper 1 bestehenden Bewegungseinheit um ca. 60° erfolgt ist. Die Drehung des Schalenkörpers 1 erfolgt um einen Drehpunkt bzw. eine sich im wesentlichen horizontal erstreckende Drehachse, die jeweils durch den momentanen Schnittpunkt der Längsachsen der Lenker 8 und 9 gebildet wird. Der Schwerpunkt der Bewegungseinheit unter Berücksichtigung der Aufnahme und Gewichtsverteilung eines Kleinkindes liegt verhältnismäßig hoch und eine Teilmasse oberhalb des Drehpunktes der Bewegungseinheit ist größer als eine durch den Bereich des Sitzteiles 2 des Schalenkörpers 1 und des Becken- und Beinbereiches eines Kleinkindes bestimmte untere Teilmasse, deren Massenmittelpunkt sich nach den Darstellungen gemäß Fig. 1 und 2 unterhalb der Drehachse befindet.

Die Festlegung des Auflagerteiles 4 durch die Gurtbefestigungseinrichtung 5 kann mit Hilfe herkömmlich vorgesehener Sicherheitsgurteinrichtungen am Rücksitz des Fahrzeuges erfolgen.

Fährt nun das Fahrzeug auf ein Hindernis auf (Vorn-Aufprall), führt die in Aufprallenergie sich umsetzende Bewegungsenergie des Fahrzeuges zu Beharrungskräften, die in Vorwärtsrichtung an der Gesamtvorrichtung mit der aus dem Kleinkind und dem Schalenkörper 1 gebildeten Bewegungseinheit sowie dem Auflagerteil 4 unter Einschluß des Koppelgetriebes 7 angreifen und belasten diese nach vorwärts, wobei die an der in Fig. 1 oberhalb des Drehpunktes konzentrierten, aus den entsprechenden Bereichen des Kleinkindes und des Schalenkörpers 1 bestehenden Teilmasse angreifende negative Beschleunigung zu einem Vorwärtsdrehmoment oder Linksdrehmoment um die ihrerseits ortsveränderliche, durch die beiden Koppelgetriebe 7 bestimmte Drehachse führt, so daß der Schalenkörper 1 mit dem darin befindlichen Kleinkind die Neigung hat, nach vorn zu schwenken. Zugleich führt jedoch die in gleicher Vorwärtsrichtung wirksame, aus der Bremsbeschleinigung der unteren Teilmasse, die unterhalb des Drehpunktes der Bewegungseinheit konzentriert ist, reslutierende Kraft zu einem entgegengesetzten Rückwärts- oder Rechtsdrehmoment um die sich verlagernde Drehachse, das dem im oberen Bereich der Rückenlehne 3 des Schalenkörpers 1 angreifenden Drehmoments entgegenwirkt, so daß, bedingt durch die Massenverteilung, ein resultierendes, den Schalenkörper 1 in die in Fig. 2 gezeigte Endstellung verschwenkendes Vorwärtsdrehmoment verbleibt, das in seiner Größe wesentlich verringert ist, so daß auch die auf das Kleinkind im Oberkörper und Kopfbereich einwirkende Beschleunigung verhältnismäßig klein ist und dazu beträgt, daß zwischen dem Oberkörper- und Kopfbereich des Kindes und der bis in den Kopfbereich reichenden Rückenlehne 3 des Schalenkörpers 1 im wesentlichen keine Relativbewegung stattfindet.

Hierbei ist gegenüber bisheriger Systeme besonders vorteilhaft, daß durch die Vermeidung einer ortsfesten Abstützung des Sitzteiles 2 des Schalenkörpers 1 im Verhältnis zum Fahrzeugsitz 6 eine teilweise Kompensation gefährlicher Belastungsdrehmomente erreicht und ein Festlager in bezug auf ein mit der Bewegungseinheit bewegtes Bezugssytem vermieden wird, so daß sich die verbleibende, bezüglich der Bewegungseinheit aus Kind und Schalenkörper 1 beachtliche Aufprallenergie in eine Vorwärts-Schwenkbewegung des Schalenkörpers 1 umsetzen kann, wobei durch verschiedenste Maßnahmen, insbesondere im Bereich der Schwenklagerung des Schalenkörpers 1 durch die Lenker 8, 9 und deren Reibungsverhältnisse, eine Steuerung der Bewegungsgeschwindigkeiten von Vorwärts-Auslenkbewegung des Schalenkörpers 1 und Rückstellbewegung in die Normallage möglich ist.

Es wird bevorzugt, daß die Rücklaufbewegung des Schalenkörpers 1 in die Normallage einer größeren Dämpfung als die aufprallbedingte Auslenkungsbewegung nach vorn in die vordere Endlage unterliegt.

Auf diese Weise ist es möglich, daß die aus dem Kleinkind und dem Schalenkörper 1 gebildete Bewegungseinheit eine integrale Schwenkbewegung ausführt und vermieden ist, daß sich der Oberkörper, insbesondere Hals- und Kopfbereich des Kindes wesentlich relativ zu der diese Bereiche abstützenden Rücklehne 3 bewegt, so daß nicht nur eine gefährdende, den Halswirbelbereich überstreckende Vorwärtsbewegung des Kopfes, sondern insbesondere auch der sogenannte "Peitscheneffekt", nämlich die ruckartige, den Halswirbelbereich gefährdende Bewegung des Kopfes nach hinten als Folge der aufprallbedingten Reaktionskräfte vermieden ist.

In der gezeigten Ausführungsform ist gemäß Fig. 2 die Besonderheit vorgesehen, daß in der vorderen, um ca. 60° ausgelenkten, aufprallbedingten Endstellung des Schalenkörpers 1 die Strebe 10 als Abstützvorrichtung in die Ausnehmung 13 im unteren Bodenbereich des Schalenkörpers 1 verrastend eingreift, so daß eine selbsttätige Rückkehrbewegung des Schalenkörpers 1 in seine Ausgangslage vermieden ist und somit lediglich die Auslenkungsbewegung der Schalenkörper-Kind-Bewegungseinheit zugelassen wird.

Wie außerdem aus Fig. 2 ersichtlich, taucht das vordere Ende 2a des Sitzteiles 2 des Schalenkörpers 1 in die in dem Kunststoff-Auflagerteil 4 vorgesehene Ausnehmung 12 ein, wobei durch entsprechende Gestaltung eines Reibungseingriffes zwischen den miteinander in Eingriff kommenden, die Ausnehmung 12 begrenzenden Flächen und den entsprechenden Gegenflächen an dem vorderen Ende 2a des Sitzteiles 2 die Möglichkeit besteht, die Bewegung des Schalenkörpers 1 einer Dämpfung, gegebenenfalls unterschiedlich zwischen der Eintauchbewegung und einer Rückkehrbewegung in die Ausgangslage, zu unterziehen.

Selbstverständlich ist die Abstützvorrichtung mit der Strebe 10 nicht notwendigerweise oder nur zum Eingriff mit den Ausnehmungen 11 und 12 im Bereich der Rücklehne vorgesehen, so daß der Schalenkörper 1 nach einem Vorn-Aufprall auch selbsttätig in seine in Fig. 1 gezeigte Stellung zurückkehren kann, wenn dies gewünscht ist.

Diese Rückkehrbewegung kann selbstverständlich auch in anderer Weise, zum Beispiel durch einen richtungsabhängig wirksamen Fluid-Dämpfungszylinder, durch entsprechende Auswahl der die Gelenke 8′, 8˝, 9′, 9˝ des linken und rechten Koppelgetriebes 7 bildenden Lagerungselemente und/oder deren gegebenenfalls richtungsabhängige Beeinflussung der Reibungsverhältnisse in diesen lagern oder durch Fluidkissen (zum Beispiel "Air Bags") gedämpft werden.

Obwohl bevorzugt, ist es auch nicht erforderlich, die Schwenklagerung des Schalenkörpers 1 durch ein Viergelenkgetriebe 7 der gezeigten Art an beiden Seiten des Schalenkörpers 1 in Verbindung mit dem Auflagerteil 4 vorzunehmen. Vielmehr kann diese Schwenklagerung auch zum Beispiel durch einen Stift-Nut-Eingriff zwischen einem den Schalenkörper seitlich umgreifenden Auflagerteil und den Seitenwangen des Schalenkörpers 1 in einer Gleitbahn erfolgen. Es ist ferner möglich, die Schwenklagerung des Schalenkörpers 1 durch eine elastische Deformation der Abstützelemente zwischen Schalenkörper und Auflagerteil selbst zu realisieren oder den Träger mit dem Auflagerteil, gegebenenfalls unter Einschluß richtungsabhängiger Lagereinrichtungen unter Bildung zumindest eines flexiblen Fluiddruckraumes zwischen dem Schalenkörper und dem Auflagerteil zu einem integralen Sitzkörper zu verbinden und hierbei als Führungsanordnung zum Beispiel eine Teleskop-Faltenbalganordnung vorzusehen. In diesem Fall wäre der Fluiddruckraum vorzugsweise in zwei Kammern unterteilt, die miteinander strömungsverbindbar sind, um eine Steuerung und Dämpfung der Schwenkbewegung in gewünschtem Maße zu erhalten.

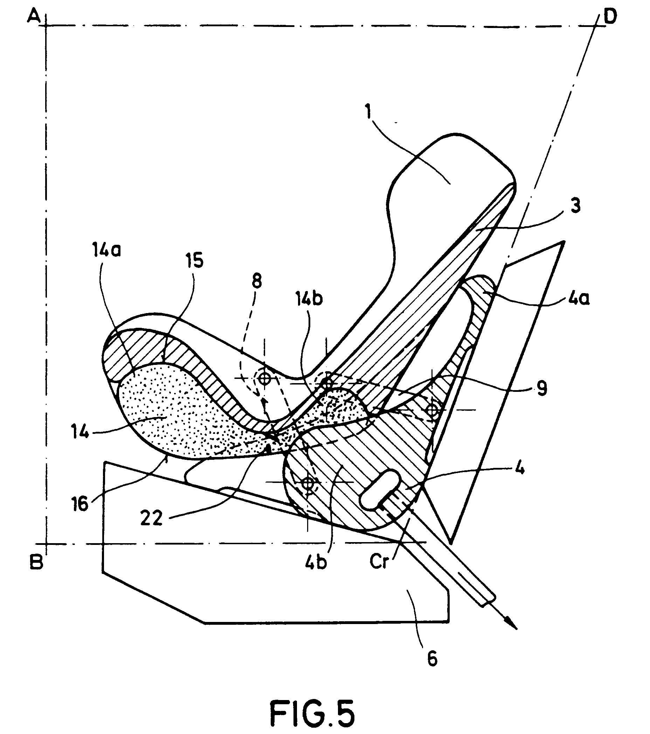

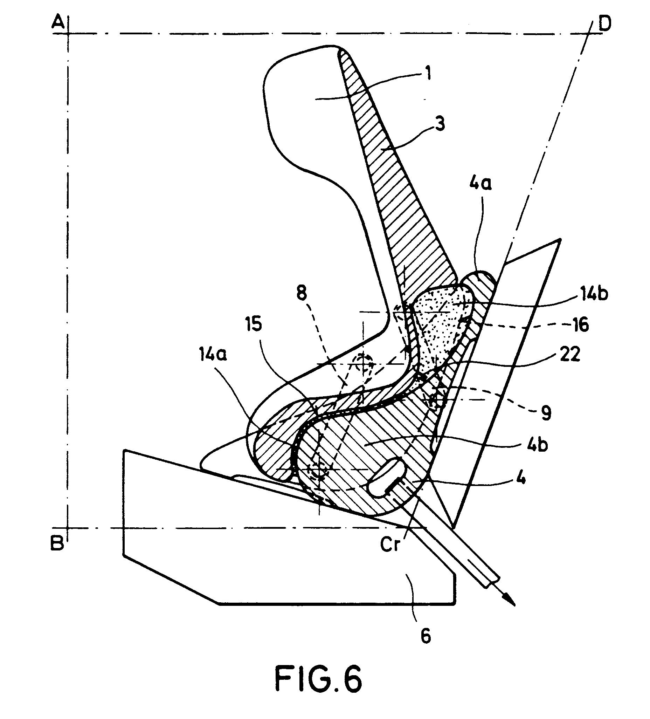

Eine Fluiddämpfungseinrichtung für die mechanisch durch ein Koppelgetriebe 7 gemäß Fig. 1 definierte Schwenkbewegung des Schalenkörpers 1 ist schematisch in den Fig. 5 und 6 dargestellt, wobei Fig. 5 eine Ruhelage des Schalenkörpers 1 und Fig. 6 eine vordere Endlage desselben bei aufprallbedingter Verschwenkung zeigt.Im wesentlichen entspricht diese Auführungsform derjenigen nach den Fig. 1 und 2, so daß auf übereinstimmende Einzelheiten hier nicht noch einmal eingegangen wird. Die Zwangsführung der Schwenkbewegung des Schalenkörpers 1, in dem ein Kind durch Gurte, Tücher oder dergleichen fixiert ist, wird wiederum durch eine Viergelenkgetriebe mit Lenker 8, 9 in Verbindung mit einem Auflagerteil 4 des Fahrzeugsitzes 6 erreicht.

Zur Verdeutlichung der die Bewegungscharakteristik des Schalenkörpers 1 beeinflussenden, durch einen Fluiddruckraum 14 gebildeten Dämpfungseinrichtung ist der Schalenkörper 1 im Längshalbschnitt dargestellt. Diese Ausführungsform ist im Vergleich zu den Fig. 1 und 2 auch für größere Kinder geeignet. Die Abstützvorrichtung für die Ruhelage des Schalenkörpers 1 wird durch eine integrale Nase 4a des Kunststoff-Auflagerteiles 4 gebildet. Die Unterseite 15 des Sitzteiles des Schalenkörpers 1 weist eine unter Berücksichtigung der Festigkeit des Sitzteiles 2 nach innen geschwungene Kontur zur Bildung des Fluiddruckraumes 14 auf, der sich bis in den unteren Bereich der Rückenlehne 3 erstreckt. Dieser Fluiddruckraum 14 ist durch eine flexible Membran 16 nach unten abgeschlossen und der Fluiddruckraum 14 ist mit einem Fluid, insbesondere Luft, gefüllt, derart, daß in Verbindung mit der aufprallbedingten Schwenkbewegung des Schalenkörpers 1 eine Verdrängung der Luft von einer ersten Kammer 14a des Fluiddruckraumes im Bereich des Sitzteiles 2 des Schalenkörpers 1 zu einer zweiten Kammer 14b des Fluiddruckraumes 14 im unteren Bereich der Rückenlehne 3, und umgekehrt, möglich ist. Die Kammern 14a, 14b sind vorzugsweise durch eine Strömungsdrosselstelle 16, gebildet durch einen Klappenventil, miteinander kommunizierend verbunden. Durch Gestaltung der Ventilverhältnisse in der Strömungsdrosselstelle 16 zwischen den Kammers 14a und 14b kann einerseits die Auslenkungsbewegung des Schalenkörpers 1 aufprallbedingt nach vorn sowie auch die Rücklaufbewegung in die in der Fig. 5 gezeigte Normallage, wie gewünscht, gedämpft werden. Zur Beeinflussung der Fluidströmung im Rahmen des Fluiddruckraumes 14 in Abhängigkeit von der Verschwenkung des Schalenkörpers 1 weist das Auflagerteil einen integralen Verdrängungs-Formkörper 4b auf, der in seiner Formgebung an die Gestaltung der Unterseite 15 des Sitzteiles 2 angepaßt ist, wie dies insbesondere Fig. 6 verdeutlicht.

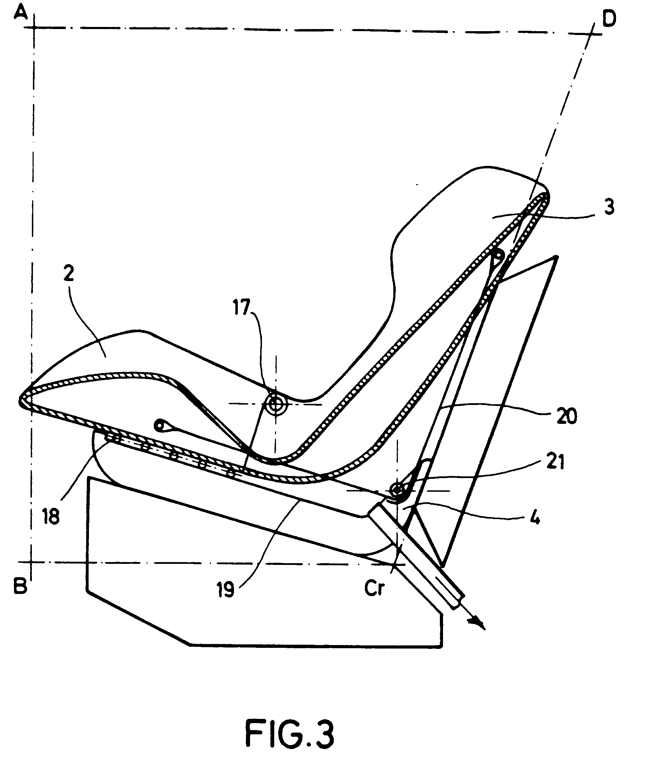

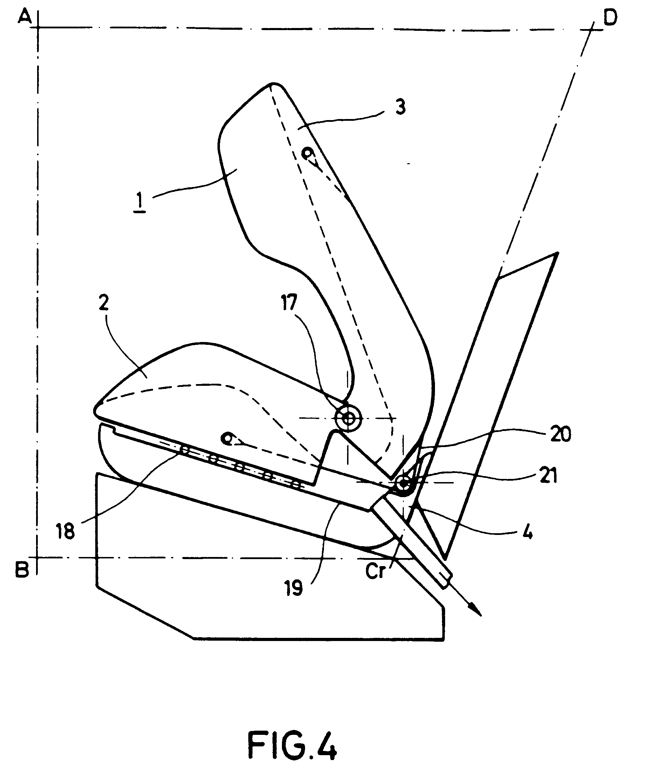

Schließlich ist in den Fig. 3 und 4 beispielhaft eine weitere Ausführungsform der erfindungsgemäßen Vorrichtung gezeigt, bei der der Schalenkörper 1 abweichend von den Ausführungen nach den Ausführungsbeispielen, die in den Fig. 1 und 2 bzw. 5 und 6 gezeigt sind, keinen einteiligen Schalenkörper 1 bildet, sondern ein zweiteiliger Schalenkörper 1 vorgesehen ist, wobei die Rückenlehne 2 über ein Gelenk 17 scharnierartig mit dem Sitzteil 2 verbunden ist. Eine solche Lösung kann insbesondere für größere Kinder oder auch für erwachsene Personen in Betracht kommen. Auch hier sind die Gurtbefestigungen des Schalenkörpers 1 für die jeweilige Person nicht mit dargestellt. Während Fig. 3 den Schalenkörper 1 in Ausgangs-Ruhelage und im Halbschnitt in schematischer Darstellung zeigt, verdeutlicht Fig. 4 die aufprallbedingte vordere Endlage des Schalenkörpers 1.

Um auch in diesem Fall die Vermeidung beträchtlicher Drehmomente unter Bewegungsausgleich zwischen den Teilmassen der Bewegungseinheit im Oberkörper- und Beinbereich einer Person, die sich in dem Schalenkörper 1 befindet, beizubehalten, ist in diesem Fall das Sitzteil 2 über eine Linearführung 18, zum Beispiel über Gleitrollen 19, Gleitschienen oder eine Kugellagerführung translatorisch entlang einer Gleitbahn 19 vor- und zurückverlagerbar, die durch das Auflagerteil 4 gebildet wird. Zur zugkraftübertragenden Verbindung zwischen der Rückenlehne 3 und dem Sitzteil 1 dient ein Zugseil 20, das über eine Umlenkrolle 21, die drehbar an dem Auflagerteil 4 gelagert ist, geführt und innerhalb des Sitzteiles 2 sowie an der Rückenlehne 3 befestigt ist. In diesem Fall sorgt eine kombinierte Translations-Kippbewegung der Bewegungseinheit aus Schalenkörper 1 und dem darin festgelegten Kind oder der darin festgelegten Person unter Verschwenkung der Rückenlehne 3 bei einem Vorn-Aufprall des Fahrzeuges dafür, daß eine gegenläufige Bewegung des Sitzteiles 2 erfolgt und ein enger Kontakt zwischen dem Oberkörper und Nackenbereich der Person an der Rückenlehne 3 des Schalenkörpers 1 in allen Bewegungsphasen bei Auftreten einer Stoßbelastung, insbesondere bei einem Vorn-Aufprall des Fahrzeuges, gewährleistet ist.

In einer Abwandlung der Ausführungsform nach den Fig. 3 und 4 wäre es auch möglich, das Gelenk 17 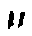 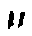 materialimmanent" zu realisieren, indem die material- und strukturbedingte Elastizität der Rückenlehne 3, insbesondere im Übergangsbereich zwischen Rückenlehne 3 und Sitzteil 2 aufprallbedingt eine entsprechende Schwenkbewegung der Rückenlehne 3 des Schalenkörpers 1 ermöglicht. In diesem Fall könnte der Schalenkörper 1 wiederum als einstückiges Teil, wie in den Fig. 1 und 2 sowie 5 und 6 dargestellt, ausgebildet werden.

Auch könnte hierbei auf eine Geradführung des Sitzteiles 2 des Schalenkörpers 1 verzichtet und dieser im wesentlichen ortsfest an dem abstützenden Fahrzeugsitz angeordnet sein.

Im Rahmen der vorliegenden Erfindung ist es selbstverständlich auch möglich, den Schalenkörper 1 in einer gegenüber der Darstellung gemäß Fig. 1 um 180° gedrehten Anordnung auf einem Beifahrer- oder Rücksitz des Fahrzeuges zu plazieren. Hierbei wäre das Gesicht des Kindes der Rückenlehne des jeweiligen Fahrzeugsitzes zugewandt und ein besonderer Schutz gegen Auffahrunfälle von hinten durch ein weiteres Fahrzeug erreicht.

## Patentansprüche

1. Vorrichtung zum Schutz einer Person, insbesondere eines Kleinkindes, in einem Kraftfahrzeug bei Längsaufprall, insbesondere Vorn-Aufprall, mit einem Träger (1), an dem die Person fixierbar ist, und der ein Sitzteil (2) sowie eine im wesentlichen bis in einen Kopfbereich der Person reichende Rückenlehne (3) aufweist und in Verbindung mit einem ortsfesten Fahrzeugsitz (6) vorgesehen ist, wobei die Person mit dem Träger (1) zu einer Bewegungseinheit verbindbar ist, so daS aufprallbedingte Relativbewegungen zwischen der Person und dem Träger im wesentlichen vermieden sind, **dadurch gekennzeichnet**, daß die Bewegungseinheit eine erste Teilmasse oberhalb einer ortsveränderlichen Schwenkachse sowie eine zweite Teilmasse unterhalb der Schwenkachse aufweist und eine aufprallbedingte, resultierende Verzögerungskraft im Bereich der Rückenlehne (3) an der ersten Teilmasse oberhalb der Schwenkachse angreift.

2. Vorrichtung nach Anspruch 1, **dadurch gekennzeichnet**, daß der Träger als Schalenkörper (1) mit Seitenwangen ausgebildet und an einem fahrzeugsitzfesten Auflagerteil (4) beweglich abgestützt ist.

3. Vorrichtung nach Anspruch 1 oder 2, **dadurch gekennzeichnet,** daß der Träger (1) an dem Auflagerteil (4) des Fahrzeugsitzes (6) über jeweils ein Viergelenkgetriebe (7), vorgesehen in Verbindung mit je einer Seitenwange des Trägers (1), schwenkbar gelagert ist.

4. Vorrichtung nach zumindest einem der vorhergehenden Ansprüche 1 bis 3, **dadurch gekennzeichnet**, daß eine Rücklauf-Dämpfungseinrichtung (14) vorgesehen ist und die Rückstellbewegung zumindest der Rückenlehne (3) des Trägers (1) nach einer Auslenkung nach vorn im Gefolge eines Längsaufpralls, insbesondere Vorn-Aufpralls des Fahrzeuges gedämpft ist.

5. Vorrichtung nach zumindest einem der vorhergehenden Ansprüche 1 bis 4, **dadurch gekennzeichnet**, daß eine Schwenklagerung (7) für den Träger (1) vorgesehen ist, deren zumindest trägerseitige Gelenke (8', 9') einen richtungsabhängigen Reibwert aufweisen, derart, daß die Rückstellbewegung des Trägers (1) einer größeren Dämpfung als die aufprallbedingte Auslenkungsbewegung der Rückenlehne (3) des Trägers nach vorn unterliegt.

6. Vorrichtung nach zumindest einem der vorhergehenden Ansprüche 1 bis 5, **dadurch gekennzeichnet**, daß ein im wesentlich in einer Richtung wirksamer hydraulischer Dämpfungskolben zur Dämpfung der Rückstellbewegung der Rückenlehne (3) in ihrer Normallage nach einer aufprallbedingten Auslenkung vorgesehen ist.

7. Vorrichtung nach zumindest einem der vorhergehenden Ansprüche 1 bis 6, **dadurch gekennzeichnet**, daß eine Abstützvorrichtung (10) für die Rückenlehne (3) in ihrer Ausgangslage vorgesehen ist.

8. Vorrichtung nach Anspruch 7, **dadurch gekennzeichnet**, daß die Abstützvorrichtung (10) nach aufprallbedingter Auslenkungs-, insbesondere Vorwärtsbewegung der Rückenlehne (3) des Trägers (1) in eine diesen in seiner ausgelenkten Endstellung festlegenden Ausnehmung (11) an dem Träger (1) eingreift.

9. Vorrichtung nach zumindest einem der vorhergehenden Ansprüche 2 bis 8, **dadurch gekennzeichnet**, daß das Auflagerteil (4) eine Aussparung (12) aufweist, in die ein vorderes Teil (2a) des Sitzbereiches (2) des Trägers (1) bei einem Vorn-Aufprall des Fahrzeuges mit erhöhtem Reibwiderstand eintaucht.

10. Vorrichtung nach zumindest einem der vorhergehenden Ansprüche 1 bis 9, **dadurch gekennzeichnet**, daß die Rückenlehne (3) des Trägers (1) schwenkbar an dem Sitzteil (2) des Trägers (1) gelagert und mit diesem über ein Zugmittelgetriebe (20) verbunden ist, während das Sitzteil (2) in einer Linearführung (18) an dem Auflagerteil (4), das seinerseits in diesem Bereich auf dem Sitzteil des Fahrzeugsitzes (6) aufruht, geführt ist.

11. Vorrichtung nach Anspruch 10, **dadurch gekennzeichnet**, daß das Zugmittelgetriebe zumindest ein, über eine an dem Auflagerteil (4) gelagerte Umlenkeinrichtung (21) geführtes Seil (20) ist.

12. Vorrichtung nach zumindest einem der vorhergehenden Ansprüche 1 bis 11, **dadurch gekennzeichnet**, daß die Rückenlehne (3) des Trägers (1) aufprallbedingt elastisch deformierbar ist.

13. Vorrichtung nach zumindest einem der vorhergehenden Ansprüche 2 bis 12, **dadurch gekennzeichnet**, daß Lagerelemente für die Abstützung des Trägers (1) an dem Auflagerteil (4) des Fahrzeugsitzes (6) elastisch deformierbar sind.

14. Vorrichtung nach zumindest einem der vorhergehenden Ansprüche 2 bis 13, **dadurch gekennzeichnet**, daß der Träger (1) mit dem Auflagerteil (4) unter Bildung zumindest eines flexiblen Fluiddruckraumes (14) zwischen dem Träger (1) und dem Auflagerteil (4) mit diesem zu einem integralen Sitzkörper verbunden ist.

15. Vorrichtung nach Anspruch 14 **dadurch gekennzeichnet**, daß der Fluiddruckraum durch eine Faltenbalganordnung gebildet ist.

16. Vorrichtung nach Anspruch 14 oder 15, **dadurch gekennzeichnet**, daß der Fluiddruckraum (14) in zumindest zwei Kammern (14a, 14b) unterteilt ist, die durch Fluidsteuermittel (22) druckabhängig miteinander verbindbar sind.

17. Vorrichtung nach zumindest einem der vorhergehenden Ansprüche 2 bis 16, **dadurch gekennzeichnet**, daß zwischen dem Träger (1) un dem Auflagerteil (4) eine mechanische Schwenkführungsanordnung (8, 9) vorgesehen ist.

18. Vorrichtung nach zumindest einem der vorhergehenden Ansprüche 2 bis 17, **dadurch gekennzeichnet**, daß an einer Unterseite (15) des Sitzteiles (2) des Trägers (1) ein durch eine flexible Membran (16) abgeschlossener Fluiddruckraum (14) gebildet und das Auflagerteil (4) mit einem Verdrängungs-Formkörper (4b) zu einer bewegungsabhängig reversiblen Formänderung des Fluiddruckraumes (14) vorgesehen ist.

19. Vorrichtung nach Anspruch 18, **dadurch gekennzeichnet**, daß der Fluiddruckraum (14) eine Bewegungsdämpfungseinrichtung des Trägers (1) bildet.

20. Vorrichtung nach Anspruch 19, **dadurch gekennzeichnet**, daß der, vorzugsweise luftgefüllte, Fluiddruckraum (14) eine vordere und eine hintere Kammer (14a, 14b) besitzt, die über eine Strömungsdrosselstelle (22) kommunizierend miteinander verbunden sind.

21. Vorrichtung nach Anspruch 20, **dadurch gekennzeichnet**, daß die Strömungsdrosselstelle durch einen ventilgesteuerten Drosselkanal gebildet wird, insbesondere in diesem eine Ventilklappe (22) vorgesehen ist.

22. Vorrichtung nach zumindest einem der vorhergehenden Ansprüche 1 bis 21, **dadurch gekennzeichnet**, daß eine Reaktionskraft zu der aufprallbedingten Bewegungskraft auf den Träger (1) durch die Bewegungslagerung des Trägers (1) unter Auslenkung desselben aufgebracht ist.

23. Vorrichtung nach Anspruch 22, **dadurch gekennzeichnet**, daß die Reaktionskraft durch eine Fluid-Dämpfungseinrichtung (14) aufgebracht ist.

24. Vorrichtung nach Anspruch 22, **dadurch gekennzeichnet**, daß die Reaktionskraft durch eine Gleitbewegung des Sitzteiles (2) in Verbindung einer Neigungsbewegung der mit dem Sitzteil (2) gelenkig verbundenen Rückenlehne (3) des Trägers (1) aufgebracht ist.

25. Vorrichtung nach Anspruch 22, **dadurch gekennzeichnet**, daß die Reaktionskraft durch eine Reibungsgelenklagerung des Trägers (1) aufgebracht ist.

26. Vorrichtung nach Anspruch 13, **dadurch gekennzeichnet**, daß eine Reaktionskraft durch eine elastische Verformung der Lagerung des Trägers (1) aufgebracht ist.

27. Verfahren zum Schutz einer Person, insbesondere eines Kleinkindes, in einem Kraftfahrzeug bei Längs-Aufprall, insbesondere Vorn-Aufprall, mit einem Träger (1), an dem die Person fixiert wird und der ein Sitzteil (2) sowie eine im wesentlichen bis in den Kopfbereich der Person reichende Rückenlehne (3) aufweist sowie in Verbindung mit einem ortsfesten Fahrzeugsitz angeordnet wird, wobei die Person mit dem Träger (1) zumindest im Bereich der Rückenlehne (3) desselben im wesentlichen zu einer Bewegungseinheit verbunden und der Träger (1) zumindest im Bereich der Rückenlehne (3) durch die Aufprallenergie bei einem Längs-Aufprall relativ zu dem Fahrzeugsitz beweglich geführt wird, derart, daß der Rücken- und Kopfbereich der Person in enger Anlage an der Rückenlehne (3) des Trägers (1) verbleibt und eine resultierende, vorwärts gerichtete Verzögerungskraft die Rückenlehne oberhalb einer horizontalen Schwenkachse nach vorne belastet.

## Claims

1. Device for protecting a person, in particular an infant, in a motor vehicle in the event of a lengthwise impact, in particular a front impact, having a carrier (1) to which the person can be fixed and which has a seat part (2) as well as a backrest (3) extending essentially into a head area of the person and is provided in combination with a fixed vehicle seat (6), in which arrangement the person can be connected to the carrier (1) to form a motional unit so that relative movements, caused by an impact, between the person and the carrier (1) are essentially avoided, characterized in that the motional unit has a first partial mass above a positionally-variable pivot axis as well as a second partial mass below the pivot axis, and a resulting retardation force, caused by an impact, in the area of the backrest (3) acts on the first partial mass above the pivot axis.

2. Device according to Claim 1, characterized in that the carrier is designed as a shell body (1) having side cheeks and is movably supported on a support part (4) fixed to the vehicle seat.

3. Device according to Claim 1 or 2, characterized in that the carrier (1) is pivotably mounted on the support part (4) of the vehicle seat (6) in each case via a four-bar mechanism (7), provided in combination with one side cheek each of the carrier (1).

4. Device according to at least one of the preceding Claims 1 to 3, characterized in that a return damping device (14) is provided and the restoring movement of at least the backrest (3) of the carrier (1) is dampened after a deflection to the front as a result of a lengthwise impact, in particular a front impact.

5. Device according to at least one of the preceding Claims 1 to 4, characterized in that a pivot mounting (7) is provided for the carrier (1), at least the carrier-side articulations (8', 9') of which pivot mounting (7) have a directionally dependent coefficient of friction such that the restoring movement of the carrier (1) is subject to greater damping than the deflection movement, caused by an impact, of the backrest (3) of the carrier to the front.

6. Device according to at least one of the preceding Claims 1 to 5, characterized in that a hydraulic damping piston acting essentially in one direction is provided for damping the restoring movement of the backrest (3) in its normal position after a deflection caused by an impact.

7. Device according to at least one of the preceding Claims 1 to 6, characterized in that a supporting device (10) is provided for the backrest (3) in its initial position.

8. Device according to Claim 7, characterized in that the supporting device (10), after a deflection movement caused by an impact, in particular a forward movement, of the backrest (3) of the carrier (1), engages in a recess (11) in the carrier (1), which recess (11) secures the carrier (1) in its deflected end position.

9. Device according to at least one of the preceding Claims 2 to 8, characterized in that the support part (4) has a recessed portion (12) into which a front part (2a) of the seat area (2) of the carrier (1) plunges with increased frictional resistance in the event of a front impact of the vehicle.

10. Device according to at least one of the preceding Claims 1 to 9, characterized in that the backrest (3) of the carrier (1) is pivotably mounted on the seat part (2) of the carrier (1) and is connected to the latter via a tension-means mechanism (20), whereas the seat part (2) is guided in a linear guide (18) on the support part (4), which in turn rests on the seat part of the vehicle seat (6) in this area.

11. Device according to Claim 10, characterized in that the tension-means mechanism is at least one cable (20) passed over a deflection device (21) mounted on the support part (4).

12. Device according to at least one of the preceding Claims 1 to 11, characterized in that the backrest (3) of the carrier (1) is elastically deformable as a result of an impact.

13. Device according to at least one of the precoding Claims 2 to 12, characterized in that the mounting elements for supporting the carrier (1) on the support part (4) of the vehicle seat (6) are elastically deformable.

14. Device according to at least one of the preceding Claims 2 to 13, characterized in that the carrier (1) is connected to the support part (4), while at least one flexible fluid-pressure space (14) is formed between the carrier (1) and the support part (4), to form an integral seat body with the latter.

15. Device according to Claim 14, characterized in that the fluid-pressure space is formed by a bellows arrangement.

16. Device according to Claim 14 or 15, characterized in that the fluid-pressure space (14) is subdivided into at least two chambers (14a, 14b) which can be connected to one another by fluid-control means (22) as a function of pressure.

17. Device according to at least one of the preceding Claims 2 to 16, characterized in that a mechanical pivot-guide arrangement (8, 9) is provided between the carrier (1) and the support part (4).

18. Device according to at least one of the preceding Claims 2 to 17, characterized in that a fluid-pressure space (14) closed off by a flexible diaphragm (16) is formed on an underside (15) of the seat part (2) of the carrier (1), and the support part (4) is provided with a shaped displacement body (4b) for a reversible change in shape of the fluid-pressure space (14) as a function of movement.

19. Device according to Claim 18, characterized in that the fluid-pressure space (14) forms a motion-damping device of the carrier (1).

20. Device according to Claim 19, characterized in that the, preferably air-filled, fluid-pressure space (14) has a front and a rear chamber (14a, 14b) which are connected to one another in a communicating manner via a flow-throttling point (22).

21. Device according to Claim 20, characterized in that the flow-throttling point is formed by a valve-controlled throttle passage, and in particular a valve flap (22) is provided in the latter.

22. Device according to at least one of the preceding Claims 1 to 21, characterized in that a reaction force with respect to the motional force caused by an impact is applied to the carrier (1) by the motional mounting of the carrier (1) while the same is deflected.

23. Device according to Claim 22, characterized in that the reaction force is applied by a fluid-damping device (14).

24. Device according to Claim 22, characterized in that the reaction force is applied by a sliding movement of the seat part (2) in combination with an inclination movement of the backrest (3), connected to the seat part (2) in an articulated manner, of the carrier (1).

25. Device according to Claim 22, characterized in that the reaction force is applied by a friction articulated mounting of the carrier (1).

26. Device according to Claim 13, characterized in that a reaction force is applied by an elastic deformation of the mounting of the carrier (1).

27. Method of protecting a person, in particular an infant, in a motor vehicle in the event of a lengthwise impact, in particular a front impact, having a carrier (1) to which the person is fixed and which has a seat part (2) as well as a backrest (3) extending essentially into the head area of the person and is arranged in combination with a fixed vehicle seat, the person being connected to the carrier (1) at least in the area of the backrest (3) of the same essentially to form a motional unit, and the carrier (1), at least in the area of the backrest (3), being movably guided relative to the vehicle seat by the impact energy in the event of a lengthwise impact in such a way that the back and head area of the person remains in close contact with the backrest (3) of the carrier (1) and a resulting retardation force directed forwards loads the backrest above a horizontal pivot axis towards the front.

## Revendications

1. Dispositif pour la protection d'une personne, notamment d'un petit enfant, dans un véhicule automobile en cas de collision longitudinale, en particulier de collision frontale, comprenant un support (1) auquel la personne peut être attachée, qui présente une partie d'assise (2) ainsi qu'un dossier (3) se prolongeant sensiblement jusque dans la région de la tête de la personne, et qui est prévu pour être combiné à un siège fixe (6) du véhicule, la personne pouvant être liée au support (1) pour former une unité cinématique de manière à éviter sensiblement les mouvements relatifs entre la personne et le support qui sont dus à une collision, caractérisé en ce que l'unité cinématique présente une première masse partielle située au-dessus d'un axe de pivotement à position variable, ainsi qu'une deuxième masse partielle située au-dessous de l'axe de pivotement, et une force de décélération résultante, due à la collision, qui s'exerce dans la région du dossier (3), attaque la première masse partielle au-dessus de l'axe de pivotement.

2. Dispositif selon la revendication 1, caractérisé en ce que le support est constitué par un corps (1) en forme de coque muni de joues latérales et est appuyé avec possibilité de déplacement sur une partie embase (4) solidaire du siège du véhicule.

3. Dispositif selon la revendication 1 ou 2, caractérisé en ce que le support (1) est articulé sur la partie embase (4) du siège (6) du véhicule par l'intermédiaire d'un mécanisme formant quadrilatère articulé (7), respectivement combiné à chacune des joues latérales du support (1).

4. Dispositif selon au moins l'une des revendications précédentes 1 à 3, caractérisé en ce qu'il est prévu un dispositif (14) d'amortissement du recul et le mouvement de rappel d'au moins le dossier (3) du support (1) est amorti après une excursion vers l'avant résultant d'une collision longitudinale, notamment d'une collision frontale du véhicule.

5. Dispositif selon au moins l'une des revendications précédentes 1 à 4, caractérisé en ce qu'il est prévu pour le support (1) un appui articulé (7) dont au moins les articulations (8', 9') côté support présentent un coefficient de frottement variant avec le sens de telle manière que le mouvement de rappel du support (1) subisse un plus grand amortissement que le mouvement d'excursion du dossier (3) du support qui résulte de la collision.

6. Dispositif selon au moins l'une des revendications précédentes 1 à 5, caractérisé en ce qu'il est prévu un piston d'amortissement hydraulique, pour l'essentiel à simple effet, pour l'amortissement du mouvement de rappel du dossier (3) dans sa position normale après une excursion résultant d'une collision.

7. Dispositif selon au moins l'une des revendications précédentes 1 à 6, caractérisé en ce qu'il est prévu un dispositif de soutien (10) pour supporter le dossier (3) dans sa position de départ.

8. Dispositif selon la revendication 7, caractérisé en ce qu'après une excursion, notamment un mouvement d'avancée, du dossier (3) du support (1) qui résulte d'une collision, le dispositif de soutien (10) s'engage dans un évidement (11) du support (1) qui immobilise ce support dans sa position d'excursion extrême.

9. Dispositif selon au moins l'une des revendications précédentes 2 à 8, caractérisé en ce que la partie embase (4) présente un évidement (12) dans lequel une partie avant (2a) de la région d'assise (2) du support (1) s'enfonce avec une plus grande résistance de frottement dans le cas d'une collision frontale du véhicule.

10. Dispositif selon au moins l'une des revendications précédentes 1 à 9, caractérisé en ce que le dossier (3) du support (1) est monté pivotant sur la partie d'assise (2) du support (1) et est assemblé à celle-ci par l'intermédiaire d'un mécanisme (20) à organe de traction, tandis que la partie d'assise (2) est guidée dans une glissière linéaire (18) prévue sur la partie embase (4), laquelle repose à son tour dans cette région sur la partie d'assise du siège (6) du véhicule.

11. Dispositif selon la revendication 10, caractérisé en ce que le mécanisme à organe de traction est au moins un câble (20) qui passe sur un dispositif de renvoi (21) tourillonnant sur la partie embase (4).

12. Dispositif selon au moins l'une des revendications précédentes 1 à 11, caractérisé en ce que le dossier (3) du support (1) est capable de se déformer élastiquement sous l'effet d'une collision.

13. Dispositif selon au moins l'une des revendications précédentes 1 à 12, caractérisé en ce que des éléments de portée prévus pour donner appui au support (1) sur la partie embase (4) du siège (6) du véhicule sont capables de se déformer élastiquement.

14. Dispositif selon au moins l'une des revendications précédentes 2 à 13, caractérisé en ce que le support (1) est assemblé à la partie embase (4) avec formation d'au moins une enceinte souple (14) à pression de fluide entre le support (1) et la partie embase (4), pour former avec celle-ci un corps de siège intégré.

15. Dispositif selon la revendication 1, caractérisé en ce que l'enceinte à pression de fluide est constituée par un dispositif à soufflet plissé.

16. Dispositif selon la revendication 14 ou 15, caractérisé en ce que l'enceinte à pression de fluide (14) est divisée en au moins deux chambres (14a, 14b) qui peuvent être mises en communication entre elles d'une façon qui varie avec la pression par des moyens de commande du fluide (22).

17. Dispositif selon au moins l'une des revendications précédentes 2 à 16, caractérisé en ce qu'un dispositif mécanique de guidage pivotant (8, 9) est prévu entre le support (20) et la partie embase (4).

18. Dispositif selon au moins l'une des revendications précédentes 2 à 17, caractérisé en ce que, contre une face inférieure (15) de la partie d'assise (2) du support (1), est formée une enceinte à pression de fluide (14) fermée par une membrane flexible (16) et la partie embase (4) est munie d'un corps de forme de refoulement (4b) servant à provoquer une déformation réversible, fonction du mouvement, de l'enceinte à pression de fluide (14).

19. Dispositif selon la revendication 18, caractérisé en ce que l'enceinte à pression de fluide (14) forme un dispositif d'amortissement du mouvement du support (1).

20. Dispositif selon la revendication 19, caractérisé en ce que l'enceinte à pression de fluide (14), qui est de préférence remplie d'air, possède une chambre avant et une chambre arrière (14a, 14b) qui sont mises en communication entre elles à travers une zone d'étranglement de l'écoulement (22).

21. Dispositif selon la revendication 20, caractérisé en ce que la zone d'étranglement de l'écoulement est formée par un canal d'étranglement commandé par soupape, en particulier, un clapet de soupape (22) est prévu dans ce canal.

22. Dispositif selon au moins l'une des revendications précédentes 1 à 21, caractérisé en ce qu'une force de réaction à la force cinétique duc à la collision est appliquée au support (1) par l'articulation de mobilité du support (1) en présence d'une excursion de ce support.

23. Dispositif selon la revendication 22, caractérisé en ce que la force de réaction est appliquée par un dispositif d'amortissement a fluide (14).

24. Dispositif selon la revendication 22, caractérisé en ce que la force de réaction est appliquée par un mouvement de glissement de la partie-d'assise (2) en combinaison avec un mouvement d'inclinaison du dossier (3) du support (l), dossier qui est relié a la partie d'assise (2) de façon articulée.

25. Dispositif selon la revendication 22, caractérisé en ce que la force de réaction est appliquée par une articulation à frottement du support (1).

26. Dispositif selon la revendication 13, caractérisé en ce qu'une force de réaction est exercée par une déformation élastique de l'articulation du support (1).

27. Procédé pour la protection d'une personne, en particulier d'un petit enfant, dans un véhicule automobile en cas de collision longitudinale, en particulier de collision frontale, comprenant un support (1) auquel la personne est attachée, et qui présente une partie d'assise (2) ainsi qu'un dossier (3) qui se prolonge sensiblement jusque dans la région de la tête de la personne, et est agencé en combinaison avec un siège fixe du véhicule, la personne étant liée ait support (1), du moins dans la région du dossier (3) de ce support, pour former sensiblement une unité cinématique, et le support (1) est guidé de façon à pouvoir se déplacer par rapport au siège du véhicule, du moins dans la région du dossier (3), sous l'effet de l'énergie de la collision dans le cas d'une collision longitudinale, de telle manière que les régions du dos et de la tête de la personne restent étroitement appuyées contre le dossier (3) du support et qu'une force de décélération résultante, dirigée vers l'avant, sollicite le dossier vers l'avant au-dessus d'un axe horizontal de pivotement.
